# EUROPÄISCHE PATENTANMELDUNG

(11) **EP 3 246 613 A1**
(43) Veröffentlichungstag der Anmeldung: **22.11.2017**
(21) Anmeldenummer: 16170257.6
(22) Anmeldetag: 19.05.2016
(51) Int. Cl.: F16L 59/02, A62C 2/06, F16L 59/14, F16L 5/04, H02G 3/04, H02G 3/22

(54) **BRANDSCHUTZPLATTE UND MODULBOX**

(71) Anmelder: HILTI Aktiengesellschaft, 9494 Schaan (LI)
(72) Erfinder: Münzenberger, Herbert, 65191 Wiesbaden (DE)
(74) Vertreter: Hilti Aktiengesellschaft Corporate Intellectual Property

(57) **Zusammenfassung**

Eine Brandschutzplatte (10) zum Abschotten von durch Wände oder Decken hindurchführende Öffnungen, insbesondere von Leitungsdurchgängen, mit einer Schicht (12) aus intumeszierendem Material und einer Verstärkungseinlage (14), ist dadurch gekennzeichnet, dass sie segmentiert ist. Des Weiteren ist eine Modulbox mit einer solchen Brandschutzplatte (10) vorgesehen.

## Beschreibung

Die Erfindung betrifft eine Brandschutzplatte zum Abschotten von durch Wände oder Decken hindurchführenden Öffnungen, mit einer Schicht aus intumeszierendem Material und einer Verstärkungseinlage, sowie eine Modulbox, die eine solche Brandschutzplatte umfasst.

Brandschutzplatten sowie Brandschutzmanschetten, die Leitungsdurchgänge mit nicht feuerfesten Rohren oder Kabeln in Decken oder Wänden im Brandfall schließen können, um eine Ausbreitung von Feuer und Rauch in Gebäuden zu verhindern, sind in verschiedensten Ausgestaltungen bekannt. Die Brandschutzplatten und Brandschutzmanschetten enthalten üblicherweise ein intumeszierendes Material, das um die Leitungen herum angeordnet wird, und eine Verstärkungseinlage, die das intumeszierende Material stabilisiert und im Brandfall den Verlust der schützenden Aschekruste verhindert bzw. verzögert.

Nachteilig bei den bekannten Brandschutzplatten ist, dass diese entweder sehr steif ausgeführt sind, wodurch sie zwar robust, aber nicht gut formbar sind, oder aber flexibel gestaltet sind, wodurch sie zwar gut formbar sind, aber ihnen die erforderliche Steifigkeit fehlt und sie ihre Form nicht halten.

Aufgabe der Erfindung ist es, eine Brandschutzplatte zu schaffen, die sowohl formbar ist als auch eine hohe Stabilität aufweist.

Zur Lösung der Aufgabe ist eine Brandschutzplatte zum Abschotten von durch Wände oder Decken hindurchführenden Öffnungen, insbesondere von Leitungsdurchgängen, mit einer Schicht aus intumeszierendem Material und einer Verstärkungseinlage vorgesehen, wobei die Brandschutzplatte segmentiert ist. Die Erfindung beruht auf dem Grundgedanken die Brandschutzplatte in Segmente aufzuteilen, die eine hohe Steifigkeit aufweisen, während die Übergänge von einem Segment zum nächsten im Vergleich zu den Segmenten selbst flexibel ausgestaltet sind. Die Segmentierung der Brandschutzplatte bewirkt somit, dass sich die Brandschutzplatte gut verformen lässt, indem die Segmente gegeneinander verstellt werden, und diese gleichzeitig durch die steifen Segmente, zumindest lokal, eine hohe Stabilität aufweist. Die Verstärkungseinlage dient zur Stabilisierung der im Brandfall entstehenden Intumeszenz-Kruste und hilft zu verhindern, dass diese in Teilen von der Brandschutzplatte abfällt. Zu diesem Zweck ist es vorteilhaft, die Verstärkungseinlage in der Oberfläche der Brandschutzplatte aus intumeszierendem Material zu positionieren, um die Außenflächen zu stabilisieren.

Die Segmentierung kann durch Vertiefungen in der Schicht aus intumeszierendem Material gebildet sein. Auf diese Weise werden durch die Vertiefungen Sollbiegestellen definiert, an denen die Brandschutzplatte einfacher verformbar ist. Indem nur die Schicht aus intumeszierendem Material verjüngt wird, während die Verstärkungseinlage an diesen Stellen unverändert beibehalten wird, weist die Brandschutzplatte eine hohe Bruchsicherheit auf. Diese Gestaltung bietet zudem die Vorteile, dass die Brandschutzplatte kostengünstig in der Herstellung und einfach in der Handhabung ist. Ferner kann die Brandschutzplatte als Band, insbesondere mit Vertiefungen in regelmäßigen Abständen, hergestellt werden, von dem Abschnitte in der erforderlichen Länge abgetrennt werden können. Durch die Vertiefungen kann das Band zudem auf eine Trommel gewickelt vorgehalten und so einfach transportiert werden.

Die Vertiefungen sind vorzugsweise keilförmig und weisen einen Winkel α zwischen 60° und 120°, vorzugsweise zwischen 80° und 100° auf. Hierdurch lassen sich zwei benachbarte Segmente leicht zueinander verstellen, wobei die beiden Segmente an ihrem Übergang eine wohldefinierte Kante ausbilden. Die genannten Winkel α sind insbesondere dazu geeignet, um zwei benachbarte Segmente in einem rechten Winkel mit der intumeszierenden Schicht auf der Innenseite zueinander zu positionieren, ohne dass dabei die intumeszierende Schicht wesentlich zusammengedrückt oder dabei eine wesentliche Lücke in der intumeszierenden Schicht gebildet wird.

Gemäß einer vorteilhaften Ausführungsform weist die Brandschutzplatte n+1 Segmente auf, die durch n vorzugsweise parallele Vertiefungen gebildet sind. Diese Gestaltung hat den Vorteil, dass keine Vertiefung an einem Ende der Brandschutzplatte angeordnet ist, sondern jede Vertiefung zwischen zwei Segmenten angeordnet ist. Indem immer ein Segment mehr als die Anzahl der Vertiefungen vorhanden sind, stehen immer zwei Segmente auf einer Seite des Rahmens zur Verfügung, die zum Schließen des Rahmen miteinander verbindbar sind und dabei in einer Ebene liegen. Auf diese Weise ist die Verbindungsstelle der beiden Enden auf einer Seite und nicht an einer Außenkante des Rahmens angeordnet, wodurch die im Brandfall besonders hoch belasteten Außenkanten nicht zusätzlich durch eine Verbindungsstelle geschwächt sind. Ferner ist an der Verbindungstelle keine Vertiefung vorhanden, die die Brandschutzeigenschaften des Rahmens beeinträchtigen könnte.

Die Verstärkungseinlage wird vorzugsweise durch eine Matte, ein Gitter oder ein Gewebe gebildet. Ein solcher Aufbau bietet eine gute Durchdringung der Schicht aus intumeszierendem Material, und die Verstärkungseinlage behält ihre stabilisierenden Eigenschaften auch bei vereinzelten strukturellen Schäden bei.

In einer bevorzugten Ausführungsform besteht die Verstärkungseinlage aus einem temperaturbeständigen Material, beispielsweise Metall, Glasfasern, Basaltfasern, Kohlenstofffasern oder Keramikfasern. Auch ein hybrider Aufbau der Verstärkungseinlage aus mehreren Materialien ist möglich. Die im Vergleich zum intumeszierendem Material höhere Temperaturbeständigkeit ist vorteilhaft, da so die Verstärkungseinlage von der das intumeszierende Material aktivierenden Temperatur nicht beeinträchtigt wird und auf diese Weise ihre stabilisierende Funktion ausüben kann.

In einer weiteren bevorzugten Ausführungsform besteht die Verstärkungseinlage aus Streckmetall. Dies ist hinsichtlich der Stabilisierungswirkung, der Kosten und der Temperaturbeständigkeit vorteilhaft.

Die Brandschutzplatte kann an zwei entgegengesetzten Enden Verschlusselemente, insbesondere Steckverbindungselemente aufweisen, die miteinander verbindbar sind. Auf diese Weise ist ein erstes Ende der Brandschutzplatte mit dem entgegengesetzten zweiten Ende verbindbar. Alternativ kann auch ein Ende einer ersten Brandschutzplatte mit einem Ende einer zweiten Brandschutzplatte verbindbar sein. Vorzugsweise sind die Verschlusselemente derart gestaltet, dass sie hermaphroditisch sind und/oder werkzeugfrei miteinander verbindbar sind. Somit können eine oder mehrere Brandschutzplatten verbunden werden, insbesondere um einen Rahmen zu bilden, der in nicht verbundene Brandschutzplatten zerlegt, kompakt transportiert und durch die Steckverbindungen einfach montiert werden kann.

Erfindungsgemäß ist zur Lösung der oben genannten Aufgabe auch eine Modulbox zum Abschotten von durch Wände oder Decken hindurchführenden Öffnungen, insbesondere von Leitungsdurchgängen, mit einem Rahmen vorgesehen, wobei mindestens 80%, vorzugsweise mindestens 90%, bevorzugt mindestens 95% eines Außenumfangs des Rahmens durch mindestens eine gefaltete erfindungsgemäße Brandschutzplatte gebildet ist. Im Sinne der Erfindung ist unter der Modulbox ein Brandschutzelement vergleichbar mit einer Brandschutzmanschette zu verstehen. Indem der Rahmen der Modulbox durch eine gefaltete erfindungsgemäße Brandschutzplatte gebildet wird, kann der Rahmen auf vielfältige Weise gestaltet werden. Dies hat die Vorteile, dass der Rahmen einfach vor Ort individuell an die abzuschottende Öffnung angepasst werden kann und eine effiziente Materialnutzung möglich ist. Zusätzlich bietet eine Reduzierung der Teile, aus denen der Rahmen aufgebaut ist, auf wenige modulare Gleichteile, wie die Brandschutzplatte, darüber hinaus aus logistischer und ökonomischer Sicht weitere Vorteile. Der Vorteil, dass mindestens 80%, vorzugsweise mindestens 90%, bevorzugt mindestens 95% eines Außenumfangs des Rahmens durch mindestens eine gefaltete Brandschutzplatte gebildet ist, ist dass nur ein relativ kleiner Abschnitt des Außenumfangs nicht durch die vorteilhaften Brandschutzeigenschaften der Brandschutzplatte(n) profitiert.

Gemäß einer vorteilhaften Ausführungsform ist mindestens 80%, vorzugsweise mindestens 90%, bevorzugt mindestens 95% eines Außenumfangs des Rahmens durch genau eine gefaltete erfindungsgemäße Brandschutzplatte gebildet. Dies hat den Vorteil, dass der nur aus einer Brandschutzplatte gebildete Rahmen nur einen einzigen Schlitz hat. Aus diesem Grund weist die Modulbox bessere Brandschutzeigenschaften auf und der Rahmen ist einfacher zu montieren als ein Rahmen, der aus mehreren Brandschutzplatten zusammengesetzt ist.

Der Rahmen kann n Außenkanten aufweisen, die durch die n Vertiefungen auf der entgegengesetzten Seite der Brandschutzplatte gebildet sind.

Gemäß einer weiteren vorteilhaften Ausführungsform umfasst die Modulbox einen Block aus intumeszierendem Material, der den Rahmen zumindest teilweise, vorzugsweise vollständig ausfüllt, wobei der Block ein Formteil ist oder durch ein in den Rahmen eingebrachtes Schaummaterial gebildet ist. Hierdurch werden die Brandschutzeigenschaften der Modulbox weiter verbessert. Zusätzlich können auf diese Weise auch große Modulboxen mit vergleichsweise dünnen Brandschutzplatten gebildet werden, da der durch den Rahmen gebildete Hohlraum mit intumeszierendem Material gefüllt ist und so die erforderlichen Brandschutzeigenschaften erreicht werden können. Ist der Block ein Formteil, so wird dieser in einem oder mehreren Stücken in den Rahmen eingesetzt und mit diesem verbaut. Die Formteile können eine beliebige Form haben, sind jedoch vorzugsweise regelmäßige Polyeder, beispielsweise Quader. Dies hat den Vorteil, dass die Anzahl der für die Brandschutzmanschette verwendeten Blöcke einfach auf die zu abzuschottende Öffnung abgestimmt werden kann. Die Reduzierung der Formteile auf wenige modulare Gleichteile bietet darüber hinaus aus logistischer und ökonomischer Sicht weitere Vorteile. Ist der Block durch ein in den Rahmen eingebrachtes Schaummaterial gebildet, wird zuerst der Rahmen montiert und anschließend der Block durch das Schaummaterial mit intumeszierenden Eigenschaften eingebracht. Der Vorteil besteht hierbei darin, dass anstelle von Formteilen nur das Schaummaterial vorgehalten werden muss und ein individuell angepasster Block aus intumeszierendem Material automatisch durch das Ausschäumen des Rahmens vor Ort entsteht.

Vorzugsweise besteht der Rahmen aus einer durchgehenden, auf die gewünschte Länge geschnittenen Brandschutzplatte, deren erstes Ende so mit dem entgegengesetzten zweiten Ende verbunden ist, dass der Rahmen gebildet ist. Auf diese Weise kann eine Brandschutzplatte mit festgelegten Abmessungen individuell gekürzt werden, um den Rahmen an verschiedene Öffnungsquerschnitte anzupassen. Dies bietet aus ökonomischer und logistischer Sicht Vorteile, da eine Brandschutzplatte für verschieden große Öffnungen verwendet werden kann und sich somit die Anzahl der für den Aufbau von Modulboxen erforderlichen Teile reduziert.

Es ist von Vorteil, wenn der Rahmen durch eine Brandschutzplatte gebildet ist, deren erstes Ende mit einem entgegengesetzten zweiten Ende mittels an diesen Enden vorgesehenen Verschlusselementen, insbesondere Steckverbindungen verbunden ist. Hierdurch kann die Modulbox, in Einzelteile zerlegt, kompakt transportiert und mittels der Verschlusselemente einfach montiert werden.

Weitere Vorteile und Merkmale ergeben sich aus der nachfolgenden Beschreibung in Verbindung mit den beigefügten Zeichnungen. In diesen zeigen:
- Figur 1a in einer Seitenansicht eine erfindungsgemäße Brandschutzplatte,
- Figur 1b in einer Draufsicht die Brandschutzplatte aus Figur 1a, und
- Figur 2 in einer perspektivischen Ansicht eine erfindungsgemäße Modulbox.

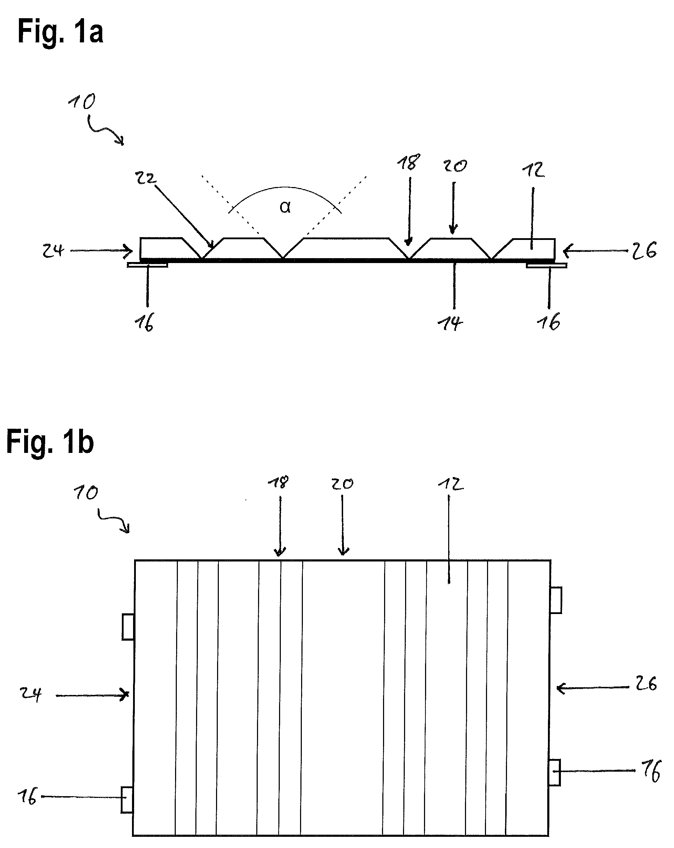

In den Figuren 1a und 1b ist eine erfindungsgemäße Brandschutzplatte 10 gezeigt, die eine Schicht 12 aus intumeszierendem Material, eine Verstärkungseinlage 14 sowie mehrere Verschlusselemente 16 umfasst.

Die Verstärkungseinlage 14 ist auf der Schicht 12 aus intumeszierendem Material angebracht und bildet eine Oberfläche der Brandschutzplatte 10. Alternativ kann die Verstärkungseinlage 14 auch zumindest teilweise in der Schicht 12 aus intumeszierendem Material angeordnet sein. In beiden Fällen ist die Schicht 12 aus intumeszierendem Material fest mit der Verstärkungseinlage 14 verbunden.

Die Schicht 12 aus intumeszierendem Material weist vier parallele Vertiefungen 18 auf, die die Brandschutzplatte 10 in fünf Segmente 20 unterteilt.

Die Vertiefungen 18 reichen bis zur Verstärkungseinlage 14 und teilen die Schicht 12 aus intumeszierendem Material vollständig. Alternativ können die Vertiefungen 18 auch flacher ausgebildet sein und die Schicht 12 aus intumeszierendem Material nicht vollständig teilen. Die Vertiefungen 18 dienen als Sollbiegestellen und müssen aus diesem Grund zumindest so tief ausgebildet sein, dass sich die Brandschutzmatte 10 leicht und wohl definiert an diesen Vertiefungen 18 falten lässt.

Die Vertiefungen 18 sind keilförmig und weisen einen Winkel α von 90° auf. In einer alternativen Ausführungsform können die Vertiefungen 18 auch anders geformte Querschnitte aufweisen, beispielsweise eine Keilform mit konkaven und/oder konvexen Flanken 22. Zusätzlich oder alternativ können auch die Winkel α von 90° abweichen, jedoch sind Winkel α zwischen 60° und 120° bevorzugt. Insbesondere können die Vertiefungen 18 in einer Brandschutzplatte 10 auch unterschiedlich zueinander gestaltet sein.

Die Verstärkungseinlage 14 besteht aus Steckmetall. In einer alternativen Ausführungsform kann die Verstärkungseinlage 14 auch aus einer Matte, einem Gitter oder einem Gewebe gebildet sein, welche(s) vorzugsweise aus Metall, Glasfasern, Basaltfasern, Kohlenstofffasern oder Keramikfasern besteht.

Die Verschlusselemente 16 sind an einem ersten Ende 24 sowie an einem dem ersten Ende 24 entgegengesetzten, zweiten Ende 26 der Brandschutzplatte 10 angeordnet und mit der Verstärkungseinlage 14 fest verbunden.

Die Verschlusselemente 16 sind auf der zur Schicht 12 aus intumeszierendem Material entgegengesetzten Seite an der Verstärkungseinlage 14 angebracht.

Die Verschlusselemente 16 sind Steckverbindungselemente, die werkzeugfrei miteinander verbindbar sind.

Die Vertiefungen 18 verlaufen parallel zu den beiden Enden 24, 26. Zusätzlich oder alternativ können Vertiefungen 18 vorgesehen sein, die in anderen Richtungen, insbesondere senkrecht zu den beiden Enden 24, 26 verlaufen.

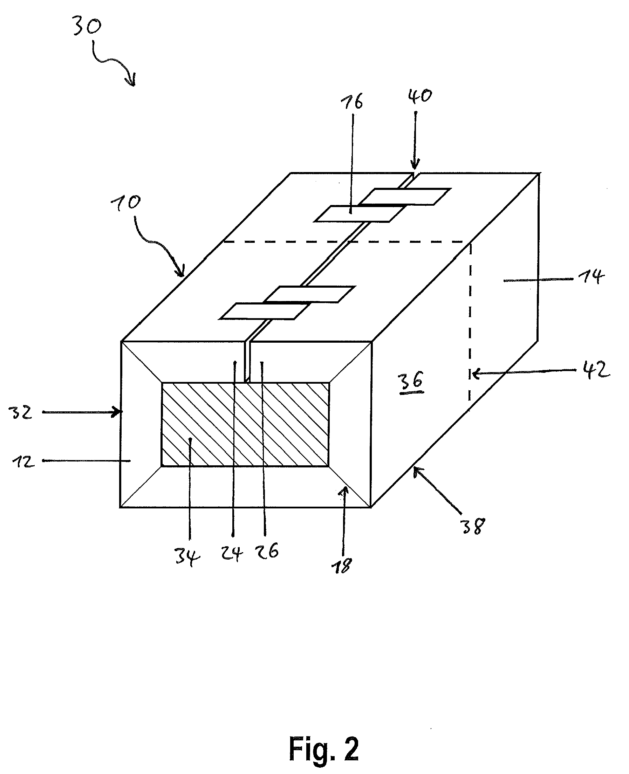

In der Figur 2 ist eine erfindungsgemäße Modulbox 30 mit einem Rahmen 32 und einem Block 34 aus intumeszierendem Material gezeigt.

Der Rahmen 32 ist quaderförmig und durch eine gefaltete Brandschutzplatte 10 mit vier Vertiefungen 18 gebildet, wobei die Verstärkungseinlage 14 an der Außenseite 36 des Rahmens 32 und die Schicht 12 mit intumeszierendem Material im Inneren angeordnet ist. Der Rahmen 32 weist vier Außenkanten 38 auf, die jeweils entgegengesetzt zu einer der vier Vertiefungen 18 liegen und beim Falten der Brandschutzplatte 10 durch diese Vertiefungen 18 gebildet werden.

Die Erfindung ist nicht auf Modulboxen 30 mit quaderförmigen Rahmen 32 begrenzt, sondern umfasst auch Modulboxen 30, die einen Rahmen 32 mit einer beliebigen Form und einem beliebigen Querschnitt aufweisen.

Ferner kann die Brandschutzplatte 10 auch mehr Vertiefungen 18 umfassen, als der Rahmen 32 Außenkanten 38 aufweist.

Von der gefalteten Brandschutzplatte 10 ist, bis auf einen schmalen Schlitz 40, der Außenumfang 42 des Rahmens 32 vollständig abgedeckt. Der Schlitz 40 ist dabei von den beiden entgegengesetzt angeordneten Enden 24, 26 der Brandschutzplatte 10 gebildet, die sich auf einer Seite des Rahmens 32 gegenüberliegen.

Der Rahmen 32 wird an der Außenseite 36 durch mehrere Verschlusselemente 16 geschlossen, die die beiden Enden 24, 26 der Brandschutzplatte 10 über den Schlitz 40 hinweg miteinander verbinden.

In einer alternativen Ausführungsform wird der Rahmen 32 durch feuerfeste Bänder oder Schellen, die den Rahmen 32 am Außenumfang 42 umschließen, sicher verschlossen.

Die Brandschutzplatte 10 kann ein auf die erforderliche Länge geschnittenes Stück eines langen Brandschutzbandes (nicht dargestellt) sein, wobei insbesondere die Enden 24, 26 durch die Schnittflächen gebildet werden. Vorzugsweise weist das Brandschutzband dabei Vertiefungen 18 auf, die in regelmäßigen Abständen angeordnet sind und/oder quer, insbesondere senkrecht, zur Längsrichtung des Brandschutzbandes verlaufen.

Der Block 34 aus intumeszierendem Material ist ein Formteil und füllt den Rahmen 32 vollständig aus. Das Formteil kann aus mehreren, vorzugsweise modularen Formteilstücken aus intumeszierendem Material zusammengesetzt sein.

Alternativ kann der Block 34 aus intumeszierendem Material durch ein in den Rahmen 32 eingebrachtes Schaummaterial gebildet sein.

Um die Modulbox 30 zu bilden, wird zuerst der Block 34 aus intumeszierendem Material, der ein Formteil ist, auf der Schicht 12 mit intumeszierendem Material der Brandschutzplatte 10 angeordnet. Anschließend wird die Brandschutzplatte 10 zum Rahmen 32 gefaltet und die beiden Enden 24, 26 mittels Verschlusselementen 16 verbunden, wobei die Schicht 12 mit intumeszierendem Material mit den Vertiefungen 18 nach innen zum Block 34 hin weist.

Alternativ kann der Block 34 aus intumeszierendem Material als Formteil auch nach dem Bilden des Rahmens 32 eingesetzt werden.

Vorzugsweise weist der Block 34 aus intumeszierendem Material als Formteil ein kleines Übermaß auf, sodass der Block 34 im Rahmen 32 mittels einer Presspassung gehalten wird und Lücken sicher abgedichtet werden.

Ist der Block 34 aus intumeszierendem Material als Schaummaterial vorgesehen, wird zuerst der Rahmen 32 gebildet und anschließen der Innenraum des Rahmens 32 mit dem intumeszierenden Schaumaterial ausgespritzt.

Der Schlitz 40 kann durch ein geeignetes Brandschutzelement, beispielsweise eine intumeszierende Einlage, verschlossen werden und/oder mit einem intumeszierenden Schaumaterial ausgespritzt werden.

Auf diese Weise lässt sich schnell und einfach aus einer Brandschutzplatte 10 eine Modulbox 30 zum Abschotten von durch Wände oder Decken hindurchführende Öffnungen bilden, die individuell an den Öffnungsquerschnitt angepasst werden kann.

## Patentansprüche

1. Brandschutzplatte (10) zum Abschotten von durch Wände oder Decken hindurchführende Öffnungen, insbesondere von Leitungsdurchgängen, mit einer Schicht (12) aus intumeszierendem Material und einer Verstärkungseinlage (14), **dadurch gekennzeichnet, dass** die Brandschutzplatte (10) segmentiert ist.

2. Brandschutzplatte nach Anspruch 1, **dadurch gekennzeichnet, dass** die Segmentierung durch Vertiefungen (18) in der Schicht (12) aus intumeszierendem Material gebildet ist.

3. Brandschutzplatte nach Anspruch 2, **dadurch gekennzeichnet, dass** die Vertiefungen (18) keilförmig sind und einen Winkel α zwischen 60° und 120°, vorzugsweise zwischen 80° und 100° aufweisen.

4. Brandschutzplatte nach Anspruch 2 oder 3, **dadurch gekennzeichnet, dass** die Brandschutzplatte (10) n+1 Segmente (20) aufweist, die durch n, vorzugsweise parallele Vertiefungen (18) gebildet sind.

5. Brandschutzplatte nach einem der vorhergehenden Ansprüche, **dadurch gekennzeichnet, dass** die Verstärkungseinlage (14) durch eine Matte, ein Gitter oder ein Gewebe gebildet ist.

6. Brandschutzplatte nach einem der vorhergehenden Ansprüche, **dadurch gekennzeichnet, dass** die Verstärkungseinlage (14) aus Metall, Glasfasern, Basaltfasern, Kohlenstofffasern oder Keramikfasern besteht.

7. Brandschutzplatte nach Anspruch 6, **dadurch gekennzeichnet, dass** die Verstärkungseinlage (14) aus Streckmetall besteht.

8. Brandschutzplatte nach eine der vorhergehenden Ansprüche, **dadurch gekennzeichnet, dass** die Brandschutzplatte (10) an zwei entgegengesetzten Enden (24, 26) Verschlusselemente (16), insbesondere Steckverbindungselemente aufweist, die miteinander verbindbar sind.

9. Modulbox (30) zum Abschotten von durch Wände oder Decken hindurchführende Öffnungen, insbesondere von Leitungsdurchgängen, mit einem Rahmen (32), **dadurch gekennzeichnet, dass** mindestens 80%, vorzugsweise mindestens 90%, bevorzugt mindestens 95% eines Außenumfangs (42) des Rahmens (32) durch mindestens eine gefaltete Brandschutzplatte (10) nach einem der Ansprüchen 1 bis 8 gebildet ist.

10. Modulbox nach Anspruch 9, **dadurch gekennzeichnet, dass** mindestens 80%, vorzugsweise mindestens 90%, bevorzugt mindestens 95% eines Außenumfangs (42) des Rahmens (32) durch genau eine gefaltete Brandschutzplatte (10) nach einem der Ansprüchen 1 bis 8 gebildet ist.

11. Modulbox nach Anspruch 9 oder 10, **dadurch gekennzeichnet, dass** der Rahmen (32) n Außenkanten (38) aufweist, die durch die n Vertiefungen (18) auf der entgegengesetzten Seite der Brandschutzplatte (10) gebildet sind.

12. Modulbox nach einem der Ansprüche 9 bis 11, **dadurch gekennzeichnet, dass** die Modulbox (30) einen Block (34) aus intumeszierendem Material umfasst, der den Rahmen (32) zumindest teilweise, vorzugsweise vollständig ausfüllt, wobei der Block (34) ein Formteil ist oder durch ein in den Rahmen (32) eingebrachtes Schaummaterial gebildet ist.

13. Modulbox nach einem der Ansprüche 9 bis 12, **dadurch gekennzeichnet, dass** der Rahmen (32) aus einer durchgehenden, auf die gewünschte Länge geschnittenen Brandschutzplatte (10) besteht, deren erstes Ende (24) so mit dem entgegengesetzten zweiten Ende (26) verbunden ist, dass der Rahmen (32) gebildet ist.

14. Modulbox nach einem der Ansprüche 9 bis 13, **dadurch gekennzeichnet, dass** der Rahmen (32) durch eine Brandschutzplatte (10) gebildet ist, deren erstes Ende (24) mit einem entgegengesetzten zweiten Ende (26) mittels an diesen Enden (24, 26) vorgesehenen Verschlusselementen (16), insbesondere Steckverbindungen verbunden ist.
